Europäisches Patentamt

European Patent Office

Office européen des brevets

(19)

(11) Publication number: **0 440 336 A2**

# (12) EUROPEAN PATENT APPLICATION

(21) Application number: 91300111.1

(22) Date of filing: 08.01.91

(51) Int. Cl.⁵: **H01R 13/66**

(30) Priority: 08.01.90 GB 9000356

(43) Date of publication of application:
07.08.91 Bulletin 91/32

(84) Designated Contracting States:
CH DE ES FR GB IT LI

(71) Applicant: AMPHENOL CORPORATION
358 Hall Avenue P.O.Box 384
Wallingford Connecticut 06492-0384 (US)

(72) Inventor: Maybour, Nicholas John
9 Blenheim Close, Herne
Herne Bay, Kent, CT6 7NB (GB)
Inventor: Gallusser, David Otis
R.D. 4, Box 96Z, Oneonta
New York, N. Y. 13820 (US)
Inventor: Le Baron, James Brownlow
6 Hatfield Avenue, Sidny
New York, N. Y. 13838 (US)

(74) Representative: Harland, Linda Jane et al
c/o Reddie & Grose 16 Theobalds Road
London WC1X 8PL (GB)

(54) Electrical connector.

(57) A connector part (10) includes a body (12) surrounding insulating inserts (13,23) which carry first pin contacts (14). The connector (10) also carries an electro-optical element (26) operatively coupled to an end of an optical fibre (43). The electro-optical element (26) has second pin contacts (30) that engage in recesses (20) in the backs of the first pin contacts (14). Alternatively, the wire leads from the electro-optical element can be inserted directly into a wire receiving barrel (45) in recesses (20) in the backs of the first pin contacts (14). The connector part (10) can be coupled to a complementary conector part to form connections to the first pin contacts (14). The connector part (14) forms an electro-optical signal converter. The electro-optical element (26) can be removed and replaced by another electro-optical element.

EP 0 440 336 A2

## ELECTRICAL CONNECTOR

The present invention relates to an electrical connector part, for forming an electrical connection with a complementary connector part.

We have appreciated that a problem arises when it is desired to form a working connection between signal-carrying electrical equipment or cable and a signal-carrying optical fibre cable. Such a working connection cannot be made conveniently and reliably by using conventional connectors.

According to the present invention, there is provided an electrical connector part for forming a connection with a complementary connector part, comprising a hollow body containing first electrical pin contacts of the connector, and further containing an electro-optical element for connecting to the end of an optical fibre, the first pin contacts of the connector part being connected electrically to the electro-optical element. The pin contacts may comprise male or female pin contacts for connecting to complementary pin contacts.

The electro-optical element may be an optical transmitter providing a light output to the fibre attached to the connector part, or an optical receiver converting light to an electrical signal.

A connector part in accordance with the invention acts as an adaptor to allow electric equipment or a cable to be connected to the end of an optical fibre cable, such that a signal in one can be converted to a corresponding signal in the other.

Preferably, the connector part includes means for receiving an end of an optical fibre, and for locating the end of the optical fibre in working contact with the electro-optical element. For example, the means may comprise an optical fibre connector of which one part is fixed to, or is part of, the said connector body, and the other part fits on the optical fibre cable. The one part of the optical fibre connector may form the means for receiving the end of the optical fibre.

Preferably, the electro-optical element is removably located in the connector part. This allows different electro-optical elements to be interchanged, so that the connector part may be used in a variety of applications. The electro-optical element may advantageously be fitted with second pin contacts, the first pin contacts mating with the second pin contacts. Different electro-optical elements may then be easily plugged-in to, or un-plugged from the connector part.

An embodiment of the invention will now be described with reference to the accompanying drawings in which :

Figure 1 is a transverse section showing a connector part for connecting an optical fibre cable to electrical equipment or to an electrical cable ;

Figure 2 is a transverse section of a modified construction of the connector part ;

Figure 3 is a transverse section of another modified constructionn of the connector part ;

Figure 4 is a transverse section of the wire barrel of the pin contact in the connector part shown in Figure 3 ; and

Figure 5 is an elevation of the spring bushing disposed within the recess in the pin contact for accepting wire leads of an electro-optical element.

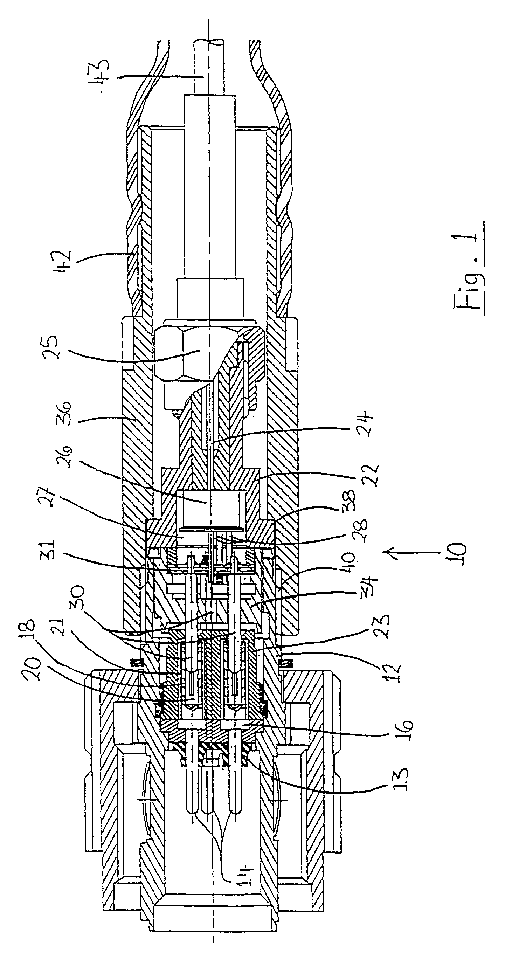

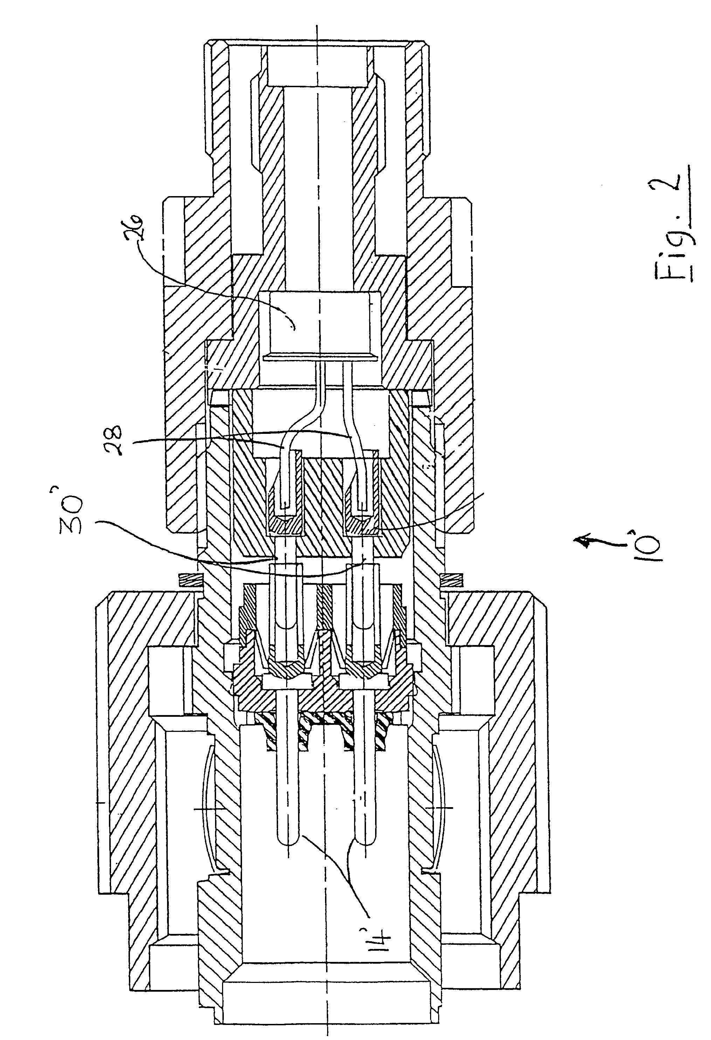

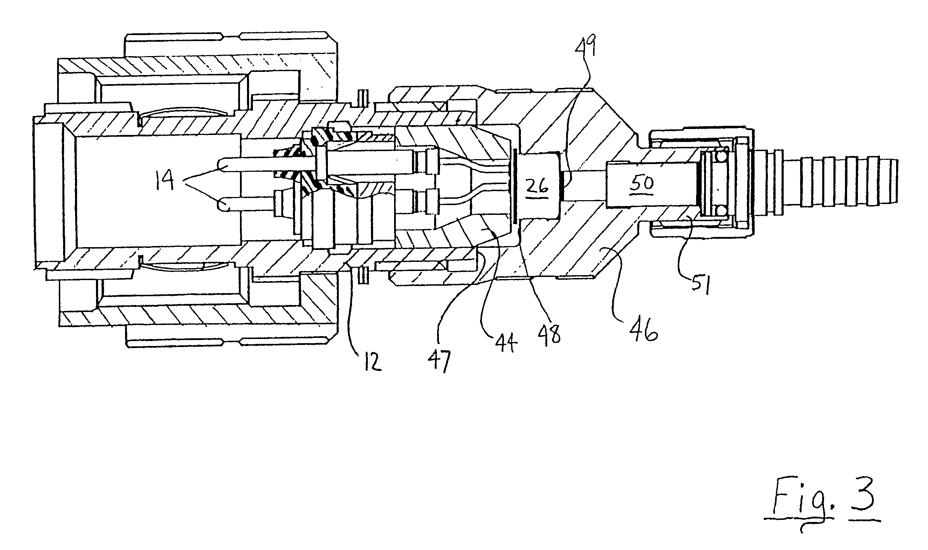

Referring to Figure 1, a connector part 10 comprises a generally cylindrical connector body 12 surrounding insulating inserts 13 and 23 which carry three first connector pin contacts 14. The body 12 is designed to engage a complementary connector part (not shown) such that the pin contacts 14 will make electrical contact with respective female pin contacts in the complementary connector part. The pin contacts 14 extend through the insulating insert 13 to the interior of the connector part 10. Each pin contact 14 includes a respective flange portion 16 which fits between the adjacent faces of the insulating inserts 13 to 23 to retain the pin contact 14 in position. Each pin contact 14 also includes a portion 18 extending inwardly from the wall 13. The portion 18 is formed with an axial recess 20, which is open at the innermost end of the pin 14. The axial recesses 20 of the pin contacts 14, respectively, form female internal sockets, for receiving second male pin contacts 30 of an insertable element to be described hereinafter. Each female socket is spring loaded, and is enclosed by a protective sheath 21 to prevent over-stressing of the socket. The insert 23 surrounds the portions 18 of the pins 14 and partially covers their open ends, thereby allowing only restricted entry of the second pin contacts 30 into the female sockets.

An end piece 22 abuts the rear end of the body 12. This end piece is one half of an optical fibre connector. The other part 25 of the optical fibre connector fits on the end of an optical fibre cable 43 to be attached to the connector part. The end piece 22 is formed with an axial through passage 24. An electro-optical element 26 housed in a casing 27 fits inside the end piece 22, the electro-optical element may be a photo-sensitive detector or a light-emitting source. In use, the end of an optical fibre 43 is received within the passage 24, for delivering light to, or receiving light from, the electro-optical element. Three connecting leads 28 extend from the element 26 and are soldered into respective holes in a printed circuit board 31. Three gold plated second pin contacts 30 are soldered to the opposite side of the board 31, and mate with the socket formed by the recesses 20 respectively, in the first contacts 14 a, b, c. The first pin contacts 14 of the connector part 10 are thus electrically connected to the electro-optical element 26.

An insert 34 fits around the second pin contacts 30. The insert 34 is formed with holes through which the second pin contacts 30 pass. The outer wall of the insert 34 is shaped to form a keyed connection with the inner face of the wall of the body 12, to allow only a single orientation of the second pin contacts 30 relative to the body 12. This ensures that the connection between the first pin contacts 14 and the second pin contacts 30 is always made with the same polarity.

The end piece 22 is secured to the body 12 by means of a back nut 36 which locates over a shoulder 38 on the end piece 22, and engages a screw thread 40 formed on the exterior surface of the body 12. A heat shrink sleeve 42 fits over an axial extension portion of the nut 36, and around the cable 43, to attach the cable 43 to the nut 36 for extra protection and strength. As the nut 36 is tightened, the second pin contacts 30 are drawn into the recesses 20 in the first pin contacts 14 to achieve a reliable connection that cannot come apart until the nut 36 is again loosened. The electro-optical element 26 and its assembly formed by the board 31, the second pin contacts 30, the end piece 22 and the casing 27, are removably located within the body 12. The element 26 can be removed by unscrewing the nut 36, and unplugging the second pin contacts 30 from the recesses 20. A replacement element 26 and assembly may be plugged-in and the nut 36 re-tightened.

The connector part 10 is of the screened type having an earth shield formed by the body 12 and back nut 36, which are of metal. Screening is desirable as the connector part could otherwise be susceptible to noise caused by electrical interference.

In use, the connector part forms an in-line connection between an electrical equipment and an optical fibre cable. The electrical equipment is fitted with a complementary connector part that mates with the pin contacts 14, and an optical fibre cable is connected to the end piece 22. With a photo-electric detector as the electro-optical element 26, the connector part converts optical signals in the optical fibre cable into electrical signals in the electrical equipment. With a light-emitting source as the electro-optical element 26, the connector part converts electrical signals in the electrical equipment into optical signals in the optical fibre cable.

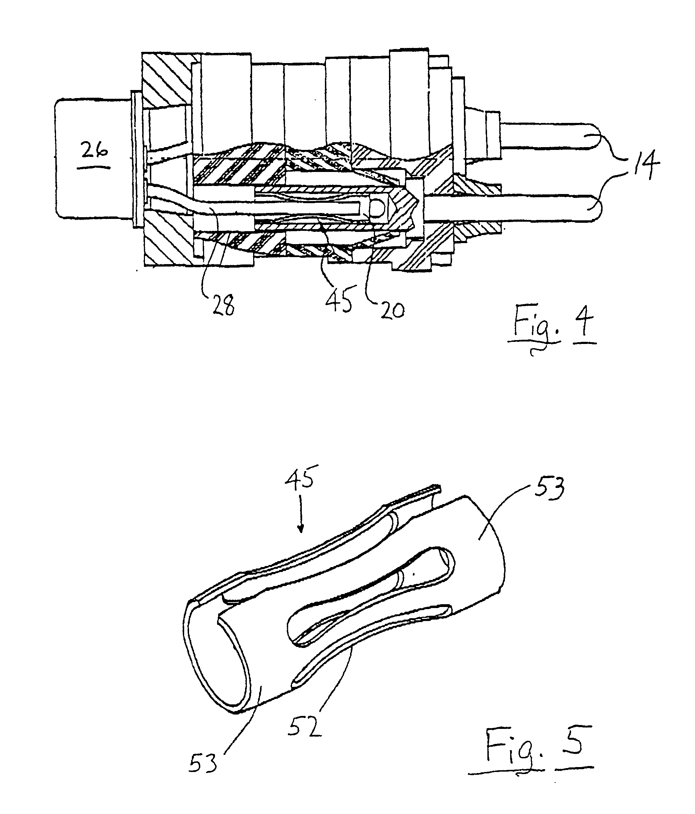

Figure 2 shows a modified construction of the connector part 10'. The connector 10' has only two first pin contacts 14', and two second pin contacts 30'. The second pin contacts 30' are soldered directly onto the ends of the leads 28 from the electro-optical element 26, rather than through the intermediate printed circuit board 31.

The connector part 10 or 10' may be a standard electrical connector part such as MIL-C-38999 with the normal grommet thereof replaced by the end part 22 containing the element 26, 27, and insert 34 and the pin contacts 30 and with the customary male or female pin contacts replaced by the pin contacts 14 which make plug-in contact with the second pin contacts 30. The end piece 22 may be one half of a standard SMA fibre optics connector.

Referring to Figure 3, an alternate construction of the connector part of the invention is shown. This construction permits a standard SMA fibre optic connector to be connected to the connector part. As shown in Figure 3, a special accessory adaptor 46 is fitted to the rear end of body 12 by, for example, screw threads. A shoulder 47 on the adaptor abuts the terminus of body 12 providing a positive axial stop. This traps the electro-optic element 26 within a central cavity 48 of the adaptor, locking it axially in position. The adaptor also provides for centering the outside diameter of the electro-optic element and concentrically positioning it with respect to the fibre optic port 49. The fibre optic port of the adaptor is configured to accept a standard SMA fibre optic connector 50. The rear end 51 of the adaptor is configures and threaded so as to mate with the coupling nut of the SMA connector. The SMA receives a standard fibre optic cable (not shown).

Also shown in Figure 3 is a lead aligning adaptor 44 for positioning and guiding the electro-optic element's wire leads into the recesses 20 of the first pin contacts 14. Thus, in this embodiment of the invention, the wire leads from the electro-optic element's wire leads into the recesses 20 of the first pin contacts 14. Thus, in this embodiment of the invention, the wire leads from the electro-optical element are plugged directly into the recesses of the first contact pins. This construction eliminates the need for second contact pins 30 depicted in Figures 1 and 2.

In order to be directly connectable to the first contact pins, a wire receiving barrel 45 is disposed within each recess 20. Figures 4 and 5 show the wire receiving barrel 45 as a conductive spring bushing which is press-fitted within the recess 20 of each contact pin 14. Wire receiving barrel 45 is, preferably, a stamped and formed plated metal part having spring members 52 which are bowed radially inwardly to provide a resilient section of reduced diameter for accepting and holding the wire leads 28 of the electro-optic element 26. Outer sections 53 of the barrel are dimensioned so as to press-fit within recess 20.

It will be appreciated that in other embodiments, greater numbers of first and second pin contact may be used. The number of first and second pin contacts depends on the number of electrical connections required for the electro-optical element and on the type of complementary connector part into which the connector part is to be plugged.

## Claims

1. An electrical connector part (10) for forming a connection with a complementary connector part, comprising a hollow body (12) containing first electrical pin contacts (14) of the connector, characterised in that it further comprises an electro-optical element (26) for connecting to the end of an optical fibre, the first pin contacts (14) of the connector part being connected electrically to the electro-optical element.

2. A connector part according to Claim 1, further comprising means for receiving an end of an optical fibre (24), and for locating the end of the optical fibre (24) in working contact with the electro-optical element (26).

3. A connector part according to Claim 1, wherein the electro-optical element (26) is removably located in the connector part (10).

4. A connector part according to Claim 3, wherein the electro-optical element (26) is fitted with second pin contacts (30), and the first pin contacts (14) mate with the second pin contacts (30).

5. A connector part according to Claim 4, wherein the first pin contacts (14) have axial recesses (20) in their ends into which the second pin contacts (30) plug.

6. A connector part according to Claim 4, further comprising keyed means (34) for establishing a keyed connection between the second pin contacts (30) and the first pin contacts (14).

7. A connector part according to Claim 1, wherein the connector part is an in-line connector part, the first pin contacts (14) and the electro-optical element (26) being arranged at opposite ends of the connector part.

8. A connector part according to Claim 1, wherein the electro-optical element (26) and a receiving body therefor replace an electrical cable grommet in the rear of an electrical connector part (10).

9. A connector part according to Claim 1, wherein the first pin contacts (14) have axial recesses (20) in their ends into which wire leads from the electro-optical element (26) are inserted.

10. A connector part according to Claim 9, wherein said axial recesses (20) contain means for accepting and holding the wire leads from the electro-optic element (26).

11. A connector part according to Claim 10, wherein said means for accepting and holding the wire leads comprises a conductive spring bushing.

12. A connector part according to Claim 9, further comprising means for positioning and guiding wire leads from the electro-optic element (26) into the axial recesses (20) in the first pin contacts (14).

Fig . 1

Fig. 2

Fig. 3

EP 0 440 336 A2

26

14

28  45  20

Fig. 4

45  53

53  52

Fig. 5

8